# FASCICULE DE BREVET EUROPEEN

(11) **EP 3 743 325 B1**
(45) Date de publication et mention de la délivrance du brevet: **02.03.2022**
(21) Numéro de dépôt: 19700622.4
(22) Date de dépôt: 18.01.2019
(51) Int. Cl.: B62D 25/20, B60K 1/04

(54) **STRUCTURE DE CAISSE INFÉRIEURE COMPRENANT UN LONGERON INTÉGRANT UN LOGEMENT D'UN ÉLÉMENT DE STOCKAGE D'ÉNERGIE**
UNTERBODENSTRUKTUR MIT EINEM SEITENELEMENT MIT EINEM GEHÄUSE FÜR EIN ENERGIESPEICHERELEMENT
LOWER BODY STRUCTURE COMPRISING A SIDE MEMBER INCORPORATING A HOUSING FOR AN ENERGY STORAGE ELEMENT

(30) Priorité: 25.01.2018 FR 1850582
(43) Date de publication de la demande: 02.12.2020
(73) Titulaire: Renault s.a.s, 92100 Boulogne Billancourt (FR)
(72) Inventeur: LARVOR, Philippe, 78960 VOISINS LE BRETONNEUX (FR); JACQUIER, Romain, 78140 VELIZY VILLACOUBLAY (FR)
(74) Mandataire: Renault Group
(86) Numéro de dépôt international: PCT/EP2019/051286
(87) Numéro de publication internationale: WO 2019/145234

(56) Documents cités:
- FR-A1- 2 972 169
- GB-A- 2 496 492
- US-A1- 2011 000 729

## Description

La présente invention se rapporte à une structure de caisse inférieure d'un véhicule automobile comprenant un logement pour un élément de stockage d'énergie, notamment de type batterie.

Le développement des véhicules hybrides ou électriques conduit à aménager un ou plusieurs logements pour y installer des éléments de stockage d'énergie formés par des batteries, en particulier des batteries au lithium. Ces batteries sont de taille plus ou moins importante, mais nécessitent une implantation particulière. Elles sont par exemple installées dans le coffre du véhicule. Pour des batteries de taille moindre, comme par exemple les batteries secondaires utilisées sur les véhicules de type micro-hybridation, on a pu proposer des logements au niveau de la structure de caisse, dans la zone du plancher du véhicule. Dans certaines réalisations, ces logements sont aménagés sous le véhicule, la batterie se trouve ainsi en extérieur et par conséquent soumise aux intempéries et au risque de vol. De plus ces logements sont aménagés au niveau d'un longeron de la structure inférieure du véhicule, en coupant le longeron pour réaliser ledit logement au niveau de cette interruption de longeron. Toutefois, les longerons ayant pour fonction de renforcer la structure du véhicule, un tel aménagement fragilise la structure. Pour pallier cette fragilité, des renforts spéciaux sont ajoutés mais ils compliquent la réalisation, et surtout alourdissent notablement le véhicule. Dans d'autres réalisations, la batterie est posée directement sur le plancher, ce qui pose des problèmes d'encombrement dans l'habitacle du véhicule.

Le document FR 2 972 169 A1 divulgue une structure de caisse inférieure d'un véhicule selon le préambule de la revendication 1.

L'invention vise à résoudre tout ou partie de ces inconvénients liés aux logements des batteries, et à proposer une solution alternative.

A cet effet, l'invention propose une structure de caisse inférieure d'un véhicule comprenant un longeron latéral de renfort qui s'étend longitudinalement au moins sous la partie plancher de l'habitacle du véhicule et transversalement entre le bord longitudinal extérieur de ladite structure et la zone centrale longitudinale de ladite structure, caractérisée en ce que ledit longeron présente une portion conformée par élargissement de sa section en un logement ouvert en sa partie supérieure sur l'intérieur du véhicule pour recevoir un élément de stockage d'énergie.

Plus particulièrement, ledit longeron est formé d'une paroi de section transversale en U, la partie ouverte du U étant tournée vers le plancher, et recouverte par un panneau de plancher latéral du véhicule présentant une découpe en regard de l'ouverture dudit logement de sorte que ledit logement débouche du plancher dans l'habitacle du véhicule.

De préférence, le fond de la portion de longeron formant ledit logement, côté extérieur du véhicule, est au même niveau que le fond du longeron hors de cette portion.

De préférence selon l'invention, ledit longeron comprend une portion sensiblement à mi-distance transversalement entre le bord longitudinal extérieur de ladite structure et la zone centrale longitudinale de ladite structure, cette portion correspondant à la portion de longeron conformée en ledit logement.

Selon un mode avantageux de l'invention, ladite structure comprend deux traverses de siège s'étendant transversalement au-dessus dudit longeron et sous un siège, en particulier un siège avant, ledit logement débouchant du plancher entre lesdites traverses. La zone comprenant ledit logement est ainsi bien protégée des chocs. En particulier, deux glissières longitudinales de siège sont disposées sur lesdites traverses de siège, ledit logement débouchant dans le plancher entre lesdites glissières.

De préférence selon l'invention, ledit logement est dimensionné pour recevoir un habillage se disposant entre la face intérieure de ses parois et les parois de l'élément de stockage d'énergie.

Selon l'invention, l'élément de stockage apte à être reçu dans ledit logement est de préférence une batterie, tout type de batterie pouvant convenir.

L'invention concerne aussi un véhicule automobile qui comprend une structure de caisse inférieure telle que définie précédemment. En particulier, l'invention est bien adapté pour un véhicule de type berline dont les sièges sont positionnés assez bas.

D'autres particularités et avantages de l'invention ressortiront à la lecture de la description faite ci-après d'un mode de réalisation de l'invention, à titre indicatif mais non limitatif, en référence aux figures annexées et pour lesquelles :
- la figure 1 illustre selon une vue en perspective de trois-quarts depuis l'arrière et de dessus (soit depuis l'intérieur du véhicule) une structure inférieure de caisse d'un véhicule munie d'un logement pour batterie selon l'invention ;
- la figure 2 correspond à l'illustration de la figure 1, une batterie représentée schématiquement étant installée dans le logement ;
- la figure 3 illustre selon une vue partielle en perspective, et de dessous (soit depuis l'extérieur de la structure du véhicule), la structure de la figure 1.

Dans la suite de la description, il est fait référence à un repère XYZ, dans lequel X est la direction longitudinale avant-arrière du véhicule, orientée vers l'arrière, Y est la direction transversale orientée vers la droite du véhicule, et Z est la direction verticale orientée vers le haut du véhicule.

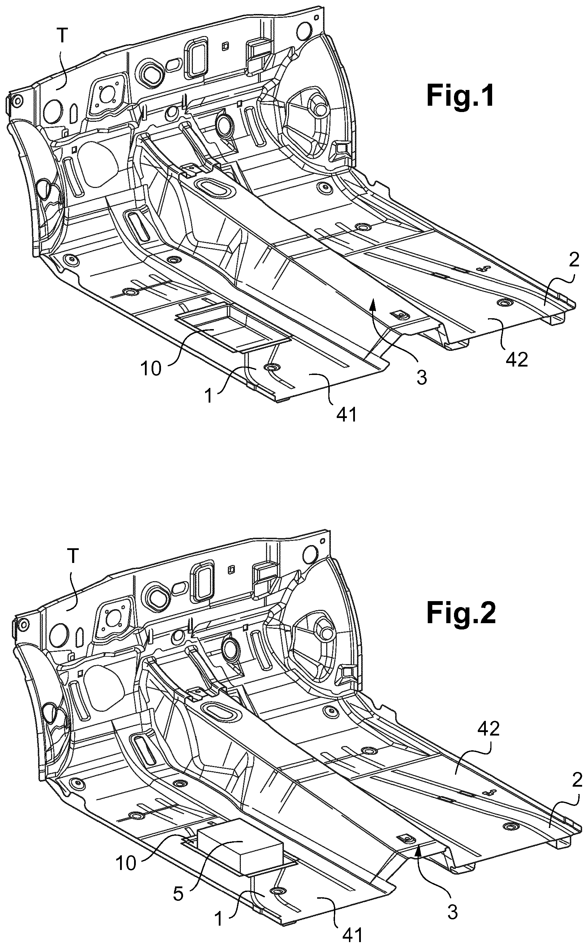

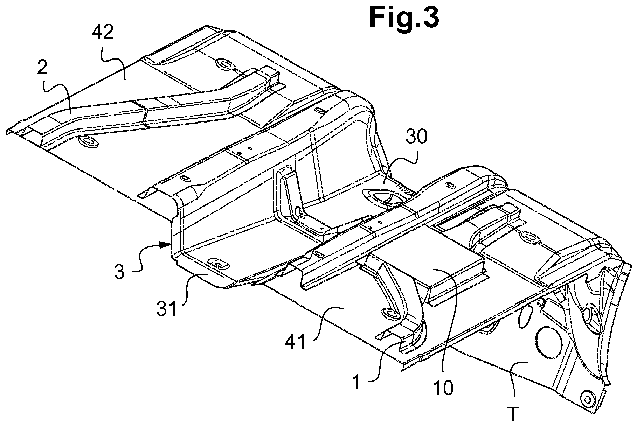

La figure 1 illustre selon l'invention, une partie inférieure de carrosserie d'un véhicule, autrement dit d'un bas de caisse ou soubassement. La figure 2 reprend la figure 1, avec la batterie posée dans le logement. La figure 3 correspond à la partie de la figure 1 retournée pour la montrer en vue de dessous. Les figures 1 à 3 sont commentées ensemble dans la suite de la description.

La partie de structure illustrée selon l'invention est la partie centrale du véhicule correspondant à la zone de l'habitacle, où se situent les sièges (non représentés). Cette partie de structure comprend deux longerons latéraux, un longeron gauche 1 et un longeron droit 2, qui s'étendent longitudinalement sous le plancher du véhicule, au niveau de l'habitacle (direction X), soit entre le tablier T, cloison séparant l'habitacle du compartiment avant du véhicule comprenant usuellement le moteur, vers la pare-close, cloison séparant l'habitacle de la zone arrière du véhicule. Par ailleurs chaque longeron s'étend transversalement dans l'habitacle, entre la zone longitudinale centrale de la structure de caisse et le bord longitudinal externe de la structure de caisse, bord gauche ou droit respectivement au longeron concerné, ledit bord comprenant généralement un élément de renfort de type bavolet et/ou longeron externe renforçant la structure et formant notamment le seuil des ouvertures de porte. Lesdits longerons 1, 2 ayant trait à l'invention sont qualifiés dans la suite de la description de longerons médians. La zone longitudinale centrale de la structure de caisse comprend classiquement un tunnel longitudinal central 3 composé de deux parties 30, 31 emboîtées l'une à la suite de l'autre. Dans un autre mode de réalisation, le tunnel central est composé d'une seule partie. Lesdits longerons médians 1, 2 peuvent ainsi ne pas être droits, ils présentent généralement au moins une portion en biais.

Le bas de caisse comporte une ou deux traverses de siège (non représentées), située(s) en dessous de chaque siège situé dans l'habitacle du véhicule. La traverse de siège supporte classiquement des glissières de guidage longitudinales (non représentées) du siège associé, et participe à la tenue mécanique de la structure du bas de caisse en cas de choc latéral notamment. La traverse de siège est formée d'une poutre disposée selon la direction transversale Y du véhicule. La traverse de siège prend appui du bord externe du véhicule sur le bavolet et du côté central du véhicule sur des éléments de structure, notamment sur le tunnel central longitudinal 3, et elle passe au-dessus d'un dit longeron médian 1, 2. Avantageusement il y a au moins deux traverses de siège parallèles entre elles sur lesquelles reposent les glissières de guidage longitudinales d'un siège, un siège étant par ailleurs usuellement supporté par deux glissières de guidage.

Chaque longeron médian 1, 2 se présente sous forme d'un profilé longitudinal à section transversale en U, la partie interne ouverte du U étant tournée vers le plancher, et revêtue d'un panneau de recouvrement latéral 41, 42, en général en tôle, formant les parties de plancher de part et d'autre du tunnel central 3. Suivant l'invention, au moins l'un desdits longerons médians, selon l'exemple le longeron gauche 1, présente une portion élargie, soit plus large que le reste de la section du longeron, qui forme le logement 10 récepteur d'une batterie 5. Cette portion élargie est réalisée de sorte que la partie ouverte du logement soit du côté intérieur du véhicule, et de préférence sans augmenter la profondeur du U (direction Z) de manière à ne pas modifier la garde au sol du véhicule. Ledit logement de batterie fait donc totalement partie du longeron, il est formé directement par la paroi du longeron. Avantageusement ledit logement est formé dans une portion de longeron qui est située plus ou moins à mi-distance entre le bord externe du bas de caisse et le tunnel central 3. Ceci permet de disposer de suffisamment d'espace libre pour élargir ladite portion de longeron. Ledit logement débouche dans l'habitacle, le panneau de plancher recouvrant ledit longeron médian 1 présentant une découpe au niveau de l'ouverture dudit logement.

De préférence ladite portion de longeron élargie formant le logement de batterie se situe de préférence sous un des sièges avant, et entre les traverses de siège (dudit siège avant). Ledit longeron médian est élargi dans la zone entre traverses sous siège avant, tout en conservant la liaison entre les parties avant et arrière du véhicule.

Cette portion de longeron peut par exemple être élargie par emboutissage de la tôle formant le profilé, pour former ledit logement de batterie, ou moulage. Le longeron peut être en acier par exemple. Le logement ainsi formé a une forme et des dimensions adaptées à celle d'une batterie, qui classiquement est de forme parallélépipédique. Les dimensions sont choisies selon le type de batterie, une batterie secondaire est par exemple un peu plus petite qu'une batterie principale. A titre indicatif et d'exemple, la batterie peut avoir une largeur (direction Y) de l'ordre de 80 - 100 mm, une longueur (direction Y) de l'ordre de 250 - 300 mm, et une hauteur (direction Z) de l'ordre 100 - 150 mm. De préférence un espace de faible dimension est prévu entre les parois du logement et la batterie pour l'habillage du logement autour de la batterie, par exemple pour apposer un cache amovible. La batterie est fixée au logement par exemple par des équerres de liaison s'interfaçant entre l'intérieur du logement et la batterie, ou par tous autres moyens de fixation adaptés.

Ledit logement étant intégré au longeron, la fonction renfort du longeron est peu affectée. Des éléments de renfort contre les chocs que peut subir le véhicule peuvent néanmoins être ajoutés pour renforcer cette zone, mais sans l'alourdir notablement, ces renforts n'ayant pas besoin d'être très lourds.

L'invention a atteint ses objectifs en proposant un logement de batterie intérieur au véhicule, sans affecter notablement la résistance aux chocs du véhicule. Le véhicule reste apte à répondre aux exigences de tenue en crash latéral et frontal. De plus ledit longeron intégrant le logement de batterie permet de positionner une batterie sous le siège d'une voiture de type berline, pour laquelle les sièges sont très bas dans l'habitacle, en comparaison de sièges d'un monospace par exemple. L'invention permet d'offrir un volume suffisamment important sous le siège d'un véhicule, même de type berline, pour y insérer une batterie. L'invention a été décrite plus spécifiquement dans le cadre d'une batterie secondaire nécessaire pour la micro-hybridation, toutefois toute batterie peut y être logée.

## Revendications

1. Structure de caisse inférieure d'un véhicule comprenant un longeron latéral de renfort (1) s'étendant longitudinalement au moins sous la partie plancher (41) de l'habitacle du véhicule et transversalement entre le bord longitudinal extérieur de ladite structure et la zone centrale longitudinale (3) de ladite structure, **caractérisée en ce que** ledit longeron présente une portion conformée par élargissement de sa section en un logement (10) ouvert en sa partie supérieure sur l'intérieur du véhicule pour recevoir un élément de stockage d'énergie (5).

2. Structure de caisse selon la revendication 1, **caractérisée en ce que** ledit longeron est formé d'une paroi de section transversale en U, la partie ouverte du U étant tournée vers le plancher, et recouverte par un panneau de plancher latéral (41) du véhicule présentant une découpe en regard de l'ouverture dudit logement de sorte que ledit logement débouche du plancher dans l'habitacle du véhicule.

3. Structure de caisse selon l'une des revendications 1 à 2, **caractérisée en ce que** le fond de la portion de longeron formant ledit logement (10), côté extérieur du véhicule, est au même niveau que le fond du longeron hors de cette portion.

4. Structure de caisse selon l'une des revendications 1 à 3, **caractérisée en ce que** ledit longeron (1) comprend une portion sensiblement à mi-distance transversalement entre le bord longitudinal extérieur de ladite structure et la zone centrale longitudinale (3) de ladite structure, cette portion correspondant à la portion de longeron conformée en ledit logement (10).

5. Structure de caisse selon l'une des revendications 1 à 4, **caractérisée en ce qu'**elle comprend deux traverses de siège s'étend transversalement au-dessus dudit longeron et sous un siège, en particulier un siège avant, ledit logement (10) débouchant du plancher entre lesdites traverses.

6. Structure de caisse selon la revendication 5, **caractérisée en ce que** deux glissières longitudinales de siège sont disposées sur lesdites traverses de siège, ledit logement (10) débouchant dans le plancher entre lesdites glissières.

7. Structure de caisse selon l'une des revendications 1 à 6, **caractérisée en ce que** ledit logement est dimensionné pour recevoir un habillage se disposant entre la face intérieure de ses parois et les parois de l'élément de stockage d'énergie (5).

8. Structure de caisse selon l'une des revendications 1 à 6, **caractérisée en ce que** l'élément de stockage apte à être reçu dans ledit logement est une batterie.

9. Véhicule automobile, **caractérisé en ce qu'**il comprend une structure de caisse inférieure définie à l'une des revendications 1 à 8.

10. Véhicule automobile selon la revendication 9, **caractérisé en ce que** ledit véhicule est de type berline.

## Patentansprüche

1. Untere Karosseriestruktur eines Fahrzeugs, welche einen seitlichen Verstärkungslängsträger (1) umfasst, der sich in Längsrichtung wenigstens unter dem Bodenteil (41) des Innenraumes des Fahrzeugs und in Querrichtung zwischen dem äußeren Längsrand der Struktur und dem Längsmittelbereich (3) der Struktur erstreckt, **dadurch gekennzeichnet, dass** der Längsträger einen Abschnitt aufweist, der durch Verbreiterung seines Querschnitts in Form einer Aufnahme (10) ausgebildet ist, die in ihrem oberen Teil zum Inneren des Fahrzeugs hin offen ist, um ein Energiespeicherelement (5) aufzunehmen.

2. Karosseriestruktur nach Anspruch 1, **dadurch gekennzeichnet, dass** der Längsträger von einer Wand mit U-förmigem Querschnitt, wobei der offene Teil des "U" dem Boden zugewandt ist, gebildet wird, die von einer seitlichen Bodenplatte (41) des Fahrzeugs bedeckt ist, die einen Ausschnitt gegenüber der Öffnung der Aufnahme aufweist, so dass die Aufnahme vom Boden aus in den Innenraum des Fahrzeugs mündet.

3. Karosseriestruktur nach einem der Ansprüche 1 bis 2, **dadurch gekennzeichnet, dass** der Boden des Längsträgerabschnitts, der die Aufnahme (10) bildet, auf der Außenseite des Fahrzeugs sich auf derselben Höhe befindet wie der Boden des Längsträgers außerhalb dieses Abschnitts.

4. Karosseriestruktur nach einem der Ansprüche 1 bis 3, **dadurch gekennzeichnet, dass** der Längsträger (1) einen Abschnitt umfasst, der sich in Querrichtung im Wesentlichen in der Mitte zwischen dem äußeren Längsrand der Struktur und dem Längsmittelbereich (3) der Struktur befindet, wobei dieser Abschnitt dem Längsträgerabschnitt entspricht, der in Form der Aufnahme (10) ausgebildet ist.

5. Karosseriestruktur nach einem der Ansprüche 1 bis 4, **dadurch gekennzeichnet, dass** sie zwei Sitzquerträger umfasst, die sich oberhalb des Längsträgers und unter einem Sitz, insbesondere einem Vordersitz, in Querrichtung erstrecken, wobei die Aufnahme (10) aus dem Boden zwischen den Querträgern mündet.

6. Karosseriestruktur nach Anspruch 5, **dadurch gekennzeichnet, dass** auf den Sitzquerträgern zwei längs verlaufende Sitzgleitschienen angeordnet sind, wobei die Aufnahme (10) im Boden zwischen den Gleitschienen mündet.

7. Karosseriestruktur nach einem der Ansprüche 1 bis 6, **dadurch gekennzeichnet, dass** die Aufnahme dafür bemessen ist, eine Verkleidung aufzunehmen, die zwischen der Innenseite ihrer Wände und den Wänden des Energiespeicherelements (5) angeordnet wird.

8. Karosseriestruktur nach einem der Ansprüche 1 bis 6, **dadurch gekennzeichnet, dass** das Speicherelement, das geeignet ist, in der Aufnahme aufgenommen zu werden, eine Batterie ist.

9. Kraftfahrzeug, **dadurch gekennzeichnet, dass** es eine untere Karosseriestruktur umfasst, wie in einem der Ansprüche 1 bis 8 definiert.

10. Kraftfahrzeug nach Anspruch 9, **dadurch gekennzeichnet, dass** das Fahrzeug vom Typ einer Limousine ist.

## Claims

1. Lower body structure of a vehicle, comprising a lateral reinforcing side member (1) extending longitudinally at least below the floor part (41) of the passenger compartment of the vehicle and transversely between the outer longitudinal edge of said structure and the longitudinal central zone (3) of said structure, **characterized in that** said side member has a portion shaped by widening its cross section to form a recess (10), the upper part of which opens into the interior of the vehicle so as to receive an energy storage element (5) .

2. Body structure according to Claim 1, **characterized in that** said side member is formed by a wall with a U-shaped cross section, the open part of the U facing the floor and being covered by a lateral floor panel (41) of the vehicle having a cutout facing the opening of said recess such that said recess opens out from the floor in the passenger compartment of the vehicle.

3. Body structure according to either one of Claims 1 and 2, **characterized in that** the base of the side-member portion forming said recess (10), on the outside of the vehicle, is at the same height as the base of the side member outside of this portion.

4. Body structure according to one of Claims 1 to 3, **characterized in that** said side member (1) comprises a portion substantially transversely halfway between the outer longitudinal edge of said structure and the longitudinal central zone (3) of said structure, this portion corresponding to the side-member portion shaped to form said recess (10).

5. Body structure according to one of Claims 1 to 4, **characterized in that** it comprises two seat crossmembers extending transversely above said side member and below a seat, in particular a front seat, said recess (10) opening out from the floor between said crossmembers.

6. Body structure according to Claim 5, **characterized in that** two longitudinal seat tracks are disposed on said seat crossmembers, said recess (10) opening out in the floor between said tracks.

7. Body structure according to one of Claims 1 to 6, **characterized in that** said recess is dimensioned to receive a covering disposed between the inner face of its walls and the walls of the energy storage element (5).

8. Body structure according to one of Claims 1 to 6, **characterized in that** the storage element able to be received in said recess is a battery.

9. Motor vehicle, **characterized in that** it comprises a lower body structure defined in one of Claims 1 to 8.

10. Motor vehicle according to Claim 9, **characterized in that** said vehicle is of the sedan type.
